# EUROPEAN PATENT SPECIFICATION

(11) **EP 0 339 113 B1**
(45) Date of publication and mention of the grant of the patent: **27.10.1993**
(21) Application number: 88106793.8
(22) Date of filing: 28.04.1988
(51) Int. Cl.: F16F 13/00, F16F 9/10, F16F 9/52

(54) **Vibration damper and isolator**
Schwingungsdämpfer und Isolator
Amortisseur de vibrations et dispositif d'isolation

(43) Date of publication of application: 02.11.1989
(73) Proprietor: HONEYWELL INC., Minneapolis Minnesota 55408 (US)
(72) Inventor: Davis, Lawrence Porter, Phoenix Arizona 85029 (US)
(74) Representative: Rentzsch, Heinz, Dipl.-Ing.

(56) References cited:
- EP-A- 0 005 730
- EP-A- 0 013 227
- DE-A- 2 428 326
- FR-A- 754 307
- GB-A- 845 539
- GB-A- 2 027 160
- GB-A- 2 172 081
- US-A- 2 562 195
- US-A- 3 243 154

## Description

The invention relates to the field of vibration isolation and more particularly to vibration damping and isolation for devices having extremely low vibration specifications.

Reaction wheel assemblies on pointing control systems are crucial elements of a telescopic system. These assemblies, however, significantly contribute vibration components to the system during operation. Since telescopes have stringent pointing requirements there is a need to isolate the vibration induced by the reaction wheel, most significantly of which are caused by the axial forces attributable to the bearing of the balls on the inner and outer races and imperfections in the balls itself.

One prior art solution to the problem, known as a wire rope, utilizes several stranded wires wrapped in a circle and attached at one end to a base or ground and at the other end to the device or payload to be isolated. Compliance and isolation are provided by the flexibility of the wire and Coulomb damping or energy absorption is provided by the wires rubbing together. This device has several short-comings which include, low damping and stiffness characteristics which are variable with the magnitude of the input vibration level, performance changes with environmental variations, and mathematical complexities that require an iteration procedure of design and test before reaching a final configuration.

A second solution of the prior art utilizes viscoelastic materials as the isolating element. These devices though capable of providing isolation for most applications, exhibit excessive sensitivity to temperature and other environmental conditions.

A vibration damping system according to the preamble of claim 1 is described in US-A 32 43 154. In this system the end piece of the first bellows and the base piece of the second bellows are fixed to a device whose vibrations are to be damped, and the means having the axial bore is a plate which is fixed to and carried by a supporting frame. A first and a second coil spring are provided within the first and second fluid chambers surrounding the shaft and with one end engaging said plate and with the other end engaging the end piece and the base piece of the bellows, respectively. Vibration absorbing material, preferably steel wool is intermeshed in and around the area of said springs. The chambers defined by said bellows are filled with an inert gas such as nitrogen or helium.

It is an object of the invention to provide an improved and reliable vibration damper and isolator. These and other objects are achieved by the invention as described in claim 1. Preferred embodiments and details are characterized in the dependent claims.

In accordance with the present invention vibration isolation and damping is achieved with an arrangement of bellows, coil spring, and fluid which eliminate rubbing surfaces, thereby Coulomb forces, and provide a stiffness that is independent of the vibration level. First and second bellows are positioned in axial alignment and fluidly sealed at opposite ends by an end piece and base respectively to form inner chambers. A shaft extending along the common axis is attached to the end piece and base to maintain a fixed separation distance therebetween. A piston having an axial bore hole and a flange extending therefrom for coupling to a payload is positioned about the shaft in a coaxial relationship, forming a fluid gap between it and the shaft. This fluid gap couples fluid chambers in the first and second bellows that are formed between the piston, the inner walls of the bellows, and the flange extension from the piston to which the previously unsealed ends of the bellows are sealed to provide for fluid containment. This arrangement obtains damping by purely viscous fluid shear forces and completely avoids any rubbing surfaces, thereby eliminating Coulomb forces. The fluid is sealed in the two fluid chambers and the gap formed between the piston and the shaft. As the payload moves, the volume of one chamber increases while the volume of the second decreases. The overall volume, due to the fixed distance between the end piece of the first bellows and the base piece of the second bellows maintained by the shaft, remains constant. Thus, fluid of constant volume that is contained within the two chambers and the gap is distributed to the chambers in accordance with the movement of the load. Damping coefficients for the invention vary as a function of fluid viscosity and the radial width and the axial length of the gap, increasing as the viscosity and the axial length increases and the radial width decreases. A spring externally coiled about the bellows supports the flange and provides stiffness to the vibration isolator.

Temperature compensation may be achieved by providing a third bellows which is axially aligned with the first and second bellows, and has a fluid chamber therewithin coupled to the fluid system of the first and second bellows to provide for the exchange of fluid between the temperature compensator and the main vibration isolator. This fluid exchange causes a constant fluid pressure to be maintained in the system with temperture variations. A spring externally coiled about the temperature compensating bellows maintains an axial force thereon to achieve a positive pressure on the internal fluid over the temperature range of interest independent of the environmental pressure.

### BRIEF DESCRIPTION OF THE DRAWINGS

Figure 1 is a cutaway view of a vibration damper and isolator, including a temperature compensating element, constructed in accordance with the principles of the invention.
Figure 2 is a schematic diagram of the vibration damper and isolator of Figure 1.

### DESCRIPTION OF THE PREFERRED EMBODIMENTS

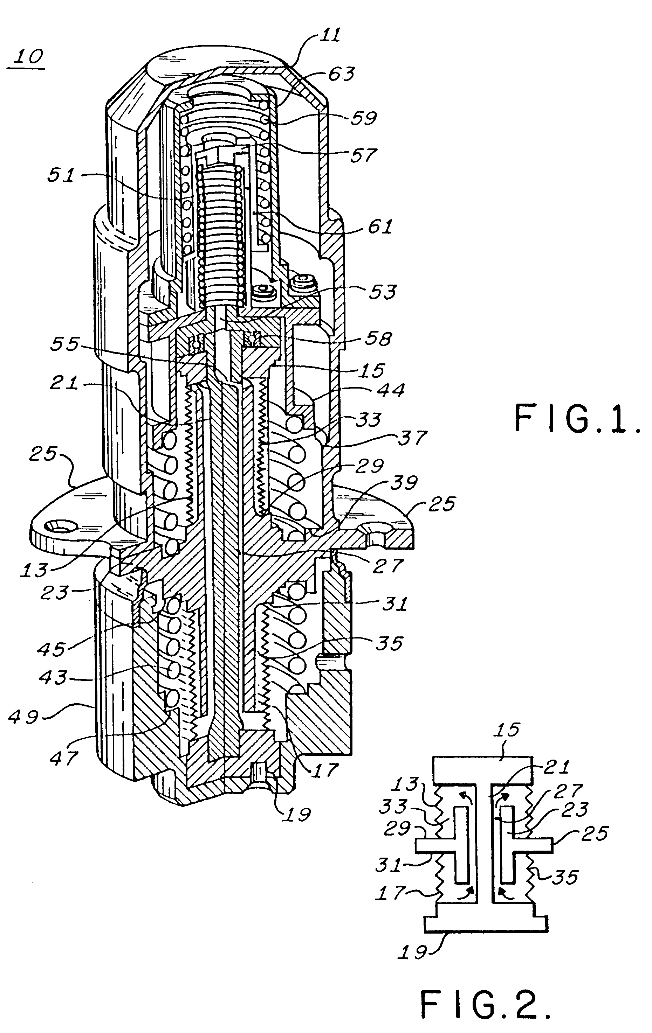

The invention will be described with respect to Figure 1. A vibration damper and isolator 10 includes a cover 11 enclosing an upper bellows 13 with an end piece 15 bonded at one end to provide a fluid seal and structural integrity. A lower bellows 17 with a base piece 19 bonded to one end, also to provide a fluid seal and structural integrity is positioned in axial alignment with the upper bellows 13. Each bellows may have a wall thickness of 75 micrometers and may be electroplated. A rigid shaft 21, coaxial with the upper and lower bellows, is bonded to the end piece 15 and the base 19 to maintain a fixed distance therebetween and thereby, a constant volume within the bellows assembly. A piston 23, having an axial bore and flange 25 extending therefrom, is coaxially positioned about the shaft 21 to create a radial gap 27 therebetween. The section of the upper bellows 13 opposite the end piece is bonded to an upper surface 29 of the flange extension of the piston, while the section of the lower bellows 17 opposite the base piece 19 is bonded to a lower surface 31 of the flange extension. An upper fluid reservoir 33 and a lower fluid reservoir 35 are respectively formed by the upper and lower bellows in combination with the flange extension and the outer surface of the piston wall. A fluid, which may be Dow corning 200 Series silicone produced by Dow Corning Corporation, is used in the system to completely fill the reservoirs 33, 35, and the gap 27. This fluid, during vibration, is forced between the upper reservoir 33 and the lower reservoir 35 via the damping gap 27. Though the volume of the upper and lower reservoirs 33, 35 may change with the motion of the payload attached to the flange, the total reservoir volume remains constant due to the fixed distance maintained by the shaft 21 between the end piece 15 and the base piece 19. Consequently, motion by the payload and flange 25 must produce equal but opposite volume changes in the upper and lower reservoirs 33, 35.

An upper stainless steel spring 37 is coiled about the outer surface of the upper bellows 13 between the upper surface 39 of the flange extension 25 and a spring retainer 44 bolted to the end piece 15. A lower stainless steel spring 43 is coiled about the outer surface of the lower bellows 17 between the lower surface 45 of the flange extension 25 and a spring retainer surface 47 formed in the skirt 49 extending from the base 19. These springs provide appropriate radial and axially stiffness for the vibration damper and isolator.

Refer now to the schematic diagram of the vibration damper and isolator shown in Figure 2, wherein elements previously cited bear the initially assigned reference numerals. In Figure 2 it is schematically shown that the end piece 15 and the base piece 19 are maintained at a fixed separation distance by a rigid shaft 21. A piston 23, with an axial bore, is coaxially positioned about the shaft 21. Extending from the piston is a flange 25 for attachment to the load. The upper bellows 13 is bonded to the end piece 15 and to the upper surface 29 of the flange extension 25,while the lower bellows 17 is bonded to the base 19 and the lower surface 31 of the flange extension. It is apparent from Figure 2 that the total volume of the fluid contained between the end piece 15, the base 19, the upper bellows 13 and the lower bellows 17 is constant. Assume an upward force is exerted on the base 19, decreasing the volume of the lower reservoir 35. This causes the volume of the upper reservoir 33 to increase and a fluid flow through the damping gap 27 from the lower reservoir 35 to the upper reservoir 33, equalizing the forces on the upper and lower surfaces of the flange extension, thereby causing the flange to remain stationary.

Referring again to Figure 1. Temperature compensation for fluid volume variation with temperature is provided by coupling thermal compensator bellows 51 through relief hole 53 and fluid channel 55 to the upper bellows 13. The thermal compensator bellows 51 is fluidly sealed by a cap 57 and the internal region of the bellows 51. The thermal compensator relief gap 53 and the relief channel 55 are filled with fluid to eliminate all air gaps in the system. An "O" ring 58 between the thermal compensator bellows 51 and the upper bellows 13 completes the fluid seal. Fluid expansion due to a temperature increase causes the thermal compensator bellows 51 to expand, thereby relieving an over pressure condition in the reservoirs 33, 35 and damping gap 27 of the vibration damper and isolator to maintain constant system pressure.

An axial force is maintained on the thermal compensator bellows 51 by a stainless steel preload spring 59 to establish a positive pressure on the internal fluid over a wide range of atmospheric pressure conditions. Spring 59 is held in place by a lower retainer 61 coupled to the cap 57 and by an upper retainer 63 extending for a predetermined distance above the lower retainer and bolted to the spring retainer 44.

## Claims

1. A vibration isolation and damping apparatus (10) comprising
a) a first bellows (13) having a first end with an end piece (15) thereat forming a fluid seal and a second end;
b) a second bellows (17) coaxially aligned with said first bellows (13) and having a first end with a base piece (19) thereat forming a fluid seal and a second end;
c) a shaft (21) of predetermined length coaxially positioned with said first and second bellows (13, 17) and coupled to said end and base pieces (15, 19), thereby maintaining a fixed predetermined separation therebetween;
d) a piston-like means (23) having an axial bore (27) coaxially positioned with said shaft (21) and having a flange extension (25) coupled to said second end of said first bellows (13) and to said second end of said second bellows (17) to establish fluid seals with said first and second bellows; with
e) said flange extension (25) having flange means for coupling said apparatus to a payload; and
f) said piston-like means (23) having said axial bore (27) and forming a first fluid chamber (33) with said first bellows (13) and forming a second fluid chamber (35) with said second bellows (17), and said axial bore (27) forming a radial gap (27) with said shaft (21), said radial gap (27) providing fluid coupling between said first and second fluid chambers (33, 35);
g) a fluid filling said first and second fluid chambers (33, 35) and said radial gap (27); and
h) spring means (37, 43) positioned between said flange extension (25) and said end piece (15) and between said flange extension (25) and said base piece (19) for providing axial stiffness;
**characterized by**
i) said spring means (37, 43) being externally coiled about said first and second bellows (13, 17) for providing radial and axial stiffness.

2. The apparatus of claim 1, **characterized in that** said piston-like means (23) extends axially into said first and second fluid chambers (33, 35) and together with said shaft (21) forms said radial gap (27) having an elongated extension in the axial direction of said piston-like means (23).

3. The apparatus of claim 1 or 2, **characterized in that** said spring means (37, 43) includes
a) a first spring retainer (44) coupled to said end piece (15);
b) a first spring (37) coiled about said first bellows (13) and positioned between said first spring retainer (44) and said flange extension (25);
c) a second spring retainer (47) coupled to said base piece (19);
d) a second spring (43) coiled about said second bellows (17) and positioned between said second spring retainer (47) and said flange extension (25).

4. The apparatus of claim 1, 2 or 3**, characterized by:**
a thermal compensator bellows (51) having an inner chamber fluid filled and fluidly coupled to said radial gap (27) and to said first and second fluid chambers (33, 35).

5. The apparatus according to claim 4, **characterized by** pressure means (59, 61, 63) coupled to said thermal compensator bellows (51), said thermal compensator bellows (51) expanding with thermal expansions of said fluid and cooperating with said pressure means (59, 61, 63) to maintain substantially constant pressure.

6. The apparatus of claim 5, **characterized in that** said pressure means (59, 61, 63) includes a spring (59) for establishing a positive pressure on said fluid.

7. The apparatus of claim 5 or 6, **characterized in that** said pressure means (59, 61, 63) includes
a) a first retainer (61) coupled to said compensator bellows (51);
b) a second retainer (63) coupled to said end piece (15) and extending coaxially a predetermined distance beyond said first retainer (61); and
c) said preload spring (59) positioned between said first and second retainers (61, 63) and coiled about said thermal compensator bellows (51).

## Patentansprüche

1. Einrichtung (10) zum Isolieren und Dämpfen von Vibrationen mit
a) einem ersten Balgen (13), welcher ein erstes Ende mit einem dort eine Fluiddichtung bildenden Endstück (15) sowie ein zweites Ende aufweist;
b) einem koaxial zum ersten Balgen (13) angeordneten zweiten Balgen (17), welcher ein erstes Ende mit einem dort einen Fluiddichtung bildenden Basisteil (19) sowie ein zweites Ende aufweist;
c) einer koaxial innerhalb des ersten und des zweiten Balgen (13, 17) angeordneten Stange (21) vorgegebener Länge, welche mit dem Endstück (15) und dem Basisteil (19) verbunden ist und diese in einem vorgegebenen Abstand hält;
d) einer kolbenartigen Vorrichtung (13) mit einer koaxial zur Stange (21) angeordneten Axialbohrung (27) und mit einer flanschartigen Erweiterung (25), die mit dem zweiten Ende des ersten Balgen (13) sowie dem zweiten Ende des zweiten Balgen (17) verbunden ist, um mit diesen Enden Fluiddichtungen zu bilden; wobei
e) die flanschartige Erweiterung (25) einen Flansch zum Verbinden der Einrichtung mit einer Nutzlast aufweist; und wobei
f) die die Axialbohrung (27) aufweisende kolbenartige Vorrichtung (23) mit dem ersten Balgen (13) eine erste Fluidkammer (33) und mit dem zweiten Balgen (17) eine zweite Fluidkammer (35) bildet und die Axialbohrung (27) mit der Stange (21) einen Radialspalt (27) bildet, welcher eine Fluidverbindung zwischen der ersten und der zweiten Fluidkammer (33, 35) herstellt;
g) einer Fluidfüllung in den ersten und zweiten Fluidkammern (33, 35) und im Radialspalt (27); sowie mit
h) zwischen der flanschartigen Erweiterung (25) und dem Endstück (15) sowie zwischen der flanschartigen Erweiterung (25) und dem Basisteil (19) angeordneten Federmitteln (37, 43) zur Erzielung einer axialen Steifigkeit,
**gekennzeichnet dadurch,**
daß
i) die Federmittel (37, 43) außen um den ersten und den zweiten Balgen (13, 14) gewickelt sind, um sowohl radiale als auch axiale Steifigkeit zu erzielen.

2. Einrichtung nach Anspruch 1, **dadurch gekennzeichnet,** daß sich die kolbenartige Vorrichtung (23) in die erste und zweite Fluidkammer (33, 35) hinein erstreckt und zusammen mit der Stange (21) den Radialspalt (27) bildet, der eine Verlängerung in Achsrichtung der kolbenartigen Vorrichtung (23) aufweist.

3. Einrichtung nach Anspruch 1 oder 2, **dadurch gekennzeichnet,** daß die Federmittel (37, 43) umfassen:
a) eine mit dem Endstück (15) verbundene erste Federabstützung (44);
b) eine um den ersten Balgen (13) gewickelte und zwischen der ersten Federabstützung (44) und der flanschartigen Erweiterung (25) befindliche erste Feder (37);
c) eine mit dem Basisteil (19) verbundene zweite Federabstützung (27);
d) eine um den zweiten Balgen (17) gewickelte und zwischen der zweiten Federabstützung (47) und der flanschartigen Erweiterung (25) angeordnete zweite Feder (43).

4. Einrichtung nach Anspruch 1, 2 oder 3, **gekennzeichnet durch** einen thermischen Kompensationsbalgen (51), dessen Innenkammer mit einem Fluid gefüllt ist, welches mit dem Radialspalt (27) sowie den ersten und zweiten Fluidkammern (33, 35) in Verbindung steht.

5. Einrichtung nach Anspruch 4, **gekennzeichnet durch** eine mit dem thermischen Kompensationsbalgen (51) gekoppelte Druckeinrichtung (59, 61, 63), wobei der thermische Kompensationsbalgen (51) sich bei thermischen Ausdehnungen des Fluids ausdehnt und mit der Druckeinrichtung (59, 61, 63) zwecks Aufrechterhaltung eines praktisch konstanten Druckes zusammenwirkt.

6. Einrichtung nach Anspruch 5, **dadurch gekennzeichnet,** daß die Druckeinrichtung (59, 61, 63) eine Feder (59) zur Erzeugung eines positiven Druckes auf das Fluid aufweist.

7. Einrichtung nach Anspruch 5 oder 6, **dadurch gekennzeichnet,** daß die Druckeinrichtung (59, 61, 63) umfaßt:
a) eine mit dem Kompensationsbalgen (51) gekoppelte erste Hülse (61);
b) eine mit dem Endstück (15) gekoppelte und koaxial eine vorgegebene Strecke über die erste Hülse (61) hinausragende zweite Hülse (63); sowie
c) eine zwischen der ersten und der zweiten Hülse (61, 63) angeordnete und um den thermischen Kompensationsbalgen (51) gewickelte Vorbelastungsfeder (59).

## Revendications

1. Appareil (10) d'isolation et d'amortissement des vibrations comprenant:
(a) un premier soufflet (13) possédant une première extrémité comportant un élément d'extrémité (15) établissant une étanchéité aux fluides , et une seconde extrémité;
(b) un second soufflet (17) aligné coaxialement avec ledit premier soufflet (13) et possédant une première extrémité comportant un élément de base (19) établissant une étanchéité aux fluides, et une seconde extrémité;
(c) un arbre (21) possédant une longueur prédéterminée et monté coaxialement avec lesdits premier et second soufflets (13,17) et couplé audit élément d'extrémité et audit élément de base (15,19), de manière à maintenir une séparation fixe prédéterminée entre ces éléments;
(d) des moyens en forme de piston (23) possédant un perçage axial (27) disposés coaxialement avec ledit arbre (21) et comportant une extension à bride (25) accouplée à ladite seconde extrémité dudit premier soufflet (13) et à ladite seconde extrémité dudit second soufflet (17) pour établir des étanchéités aux fluides avec lesdits premier et second soufflets;
(e) ladite extension à bride (25) comprenant des moyens formant bride pour accoupler ledit dispositif à une charge utile; et
(f) lesdits moyens en forme de piston (23) comportant ledit perçage axial (27) et formant, avec ledit premier soufflet (13), une première chambre (33) pour un fluide tout en formant, avec ledit second soufflet (17), une seconde chambre (35) pour un fluide, et ledit perçage axial (27) délimitant un intervalle radial (27) avec ledit arbre (21), ledit intervalle radial (27) établissant un accouplement fluidique entre lesdites première et seconde chambres (33,35) pour le fluide;
(g) le fluide remplissant lesdites première et seconde chambres (33,35) pour le fluide et ledit intervalle radial (27); et
(h) des moyens formant ressorts (37,43) disposés entre ladite extension à bride (25) et ledit élément d'extrémité (15) et entre ladite extension à bride (25) et ledit élément de base (19) pour établir une rigidité axiale;
caractérisé en ce que
(i) lesdits moyens formant ressorts (37,43) sont enroulés extérieurement autour desdits premier et second soufflets (13,17) pour établir une rigidité radiale et axiale.

2. Appareil selon la revendication 1, caractérisé en ce que lesdits moyens en forme de piston (23) s'étendent axialement à l'intérieur des première et seconde chambres (33,35) pour le fluide et forment, conjointement avec ledit arbre (21), ledit intervalle radial (27) s'étendant selon une disposition allongée dans la direction axiale desdits moyens en forme de piston (23).

3. Appareil selon la revendication 1 ou 2, caractérisé en ce que lesdits moyens formant ressorts (37,43) comprennent:
(a) un premier dispositif (44) de retenue de ressort couplé audit élément d'extrémité (15);
(b) un premier ressort (37) enroulé autour dudit premier soufflet (13) et positionné entre ledit premier dispositif (44) de retenue de ressort et ladite extension à bride (25);
(c) un second dispositif (47) de retenue de ressort, accouplé audit élément de base (19);
(d) un second ressort (43) enroulé autour dudit second soufflet (17) et disposé entre ledit second dispositif (47) de retenue de ressort et ladite extension à bride (25).

4. Appareil selon la revendication 1,2 ou 3, caractérisé par :
un soufflet formant compensateur thermique (51) comportant une chambre intérieure remplie par le fluide et couplée fluidiquement audit intervalle radial (27) et auxdites première et seconde chambres (23,35) pour le fluide.

5. Appareil selon la revendication 4, caractérisé par des moyens de pression (59,61,63) couplés audit soufflet formant compensateur thermique (51), ledit soufflet formant moyen compensateur thermique (51) se dilatant lors de dilatations thermiques dudit fluide et coopérant avec lesdits moyens de pression (59,61,63) pour fournir une pression sensiblement constante.

6. Appareil selon la revendication 5, caractérisé en ce que lesdits moyens de pression (59,61,63) comprennent un ressort (59) servant à appliquer une pression positive audit fluide.

7. Appareil selon la revendication 5 ou 6, caractérisé en ce que lesdits moyens de pression (59,61,63) comprennent:
(a) un premier dispositif de retenue (61) couplé audit soufflet compensateur (51);
(b) un second dispositif de retenue (63) couplé audit élément d'extrémité (15) et s'étendant coaxialement sur une distance prédéterminée au-delà dudit premier dispositif de retenue (61); et
(c) ledit ressort de précontrainte (59) disposé entre lesdits premier et second dispositifs de retenue (61,63) est enroulé autour dudit soufflet formant compensateur thermique (51).
